## Europäisches Patentamt
## European Patent Office
## Office européen des brevets

(19)

(11) Numéro de publication: **0 037 616**
**B1**

(12)

# FASCICULE DE BREVET EUROPÉEN

(45) Date de publication du fascicule du brevet:
02.07.86

(21) Numéro de dépôt: 81200380.4

(22) Date de dépôt: 06.04.81

(51) Int. Cl.⁴: **C 08 F 36/04,** C 08 F 2/38,
C 08 F 4/52

(54) **Procédé de préparation de polymères de diènes conjugués ou de copolymères de diènes conjugués, soit entre eux, soit avec un composé vinylaromatique.**

(30) Priorité: 09.04.80 FR 8008108

(43) Date de publication de la demande:
14.10.81 Bulletin 81/41

(45) Mention de la délivrance du brevet:
02.07.86 Bulletin 86/27

(84) Etats contractants désignés:
AT BE CH DE GB IT LI LU NL SE

(56) Documents cité:
FR-A-1 357 645
FR-A-1 441 732
FR-A-2 302 311

**Le dossier contient des informations techniques présentées postérieurement au dépôt de la demande et ne figurant pas dans le présent fascicule.**

(73) Titulaire: **MICHELIN & CIE (Compagnie Générale des Etablissements Michelin) Société dite:, 4 rue du Terrail, F-63000 Clermont- Ferrand (FR)**

(72) Inventeur: **Freppel, Christian, 124 bis avenue Joseph Claussat, F-63400 CHamalieres (FR)**

(74) Mandataire: **Hiebel, Robert, MICHELIN & CIE - Service K. Brevets, F-63040 Clermont- Ferrand Cedex (FR)**

LIBER, STOCKHOLM 1986

## Description

La présente invention a pour objet un procédé permettant de modifier la distribution des masses moléculaires lors de la synthèse d'homopolymères de diènes conjugués et de copolymères de diènes conjugués avec d'autres diènes conjugués ou avec des composés vinylaromatiques.

Il est connu d'après la demande de brevet allemand publiée avant examen n° 26 07 721, qui est au nom de la demanderesse, de préparer des polymères de diènes conjugués et des copolymères de diènes conjugués avec d'autres diènes conjugués ou avec des composés vinylaromatiques possédant des microstructures extrêmement variables et une distribution monomodale des masses moléculaires à l'aide d'un système catalytique constitué par le produit de réaction d'un composé organique d'un métal du groupe 3 A de la classification périodique des éléments du tableau de Mendeléev répondant à l'une des formules suivantes:

$Me_1 M R_1 R_2 R_3 R_4$

$Me_2[M R_1 R_2 R_3 R_4]_2$

$M R_1 R_2 R_3$

$Me_1 O M R_1 R_2$

dans lesquelles $Me_1$ représente un métal alcalin, $Me_2$ représente un métal alcalino-terreux, M un métal du groupe 3 A, $R_1$, $R_2$, $R_3$ représentent un radical alcoyle ou aralcoyle et $R_4$ représente soit un reste alcoyle ou aralycoyle, soit un reste XB dans lequel X représente un atome d'oxygène, de soufre ou d'azote et B soit un radical alcoyle ou aralcoyle, soit un reste $M (R_5 R_6)$ dans lequel $R_5$, $R_6$ représentent un radical alcoyle ou aralcoyle, avec un ou plusieurs composés donneurs d'électrons renfermant un ou plusieurs hétéroatomes choisis parmi les composés polaires aprotiques, les composés polaires protiques, les composés constitués par le produit de réaction des composés polaires protiques avec un métal alcalin ou alcalino-terreux.

Il est souhaitable de disposer de moyens permettant de modifier et de régler la distribution des masses moléculaires des polymères de diènes conjugués et des copolymères de diènes conjugués avec d'autres diènes conjugués ou avec des composés vinylaromatiques pour un certain nombre d'applications industrielles de ces produits car la modification de la distribution des masses moléculaires permet d'améliorer grandement certaines propriétés comme par exemple l'aptitude à être travaillé sur outil, le fluage à froid, la cohésion à cru, le collant à cru, etc. sans pénaliser les autres propriétés.

Il est connu de l'homme de l'art qu'il est possible d'élargir la distribution des masses moléculaires et d'obtenir des polymères bimodaux ou multimodaux en mélangeant plusieurs polymères de viscosités différentes.

Cependant, un tel procédé présente l'inconvénient de nécessiter la synthèse séparée de plusieurs polymères et copolymères de viscosités différentes ce qui entraîne des problèmes de reproductibilité du procédé, nécessite des quantités catalytiques très importantes, entraîne de longs délais et rend finalement ce procédé inintéressant tant du point de vue technique que du point de vue économique.

De même, il est connu de modifier la distribution des masses moléculaires de polymères et de copolymères dans des procédés réalisés soit en discontinu, soit en continu en fractionnant la quantité de catalyseur nécessaire et en l'ajoutant à des moments différents lors du déroulement de la polymérisation ou de la copolymérisation. Cependant, un tel mode opératoire qui nécessite également des quantités catalytiques très importantes, d'autant plus grandes que l'élargissement de la distribution des masses moléculaires souhaité est plus important, est par conséquent lui aussi très coûteux. De plus, il serait extremement difficile à réaliser industriellement.

La présente invention a pour objet de remédier à ces inconvénients en fournissant un procédé qui soit économiquement plus intéressant et qui permette de modifier et de régler facilement la distribution des masses moléculaires au cours de la synthèse de polymères de diènes conjugués et de copolymères de diènes conjugués avec d'autres diènes conjugués ou avec des composés vinylaromatiques et d'obtenir des polymères et des copolymères bimodaux ou multimodaux.

La demanderesse a trouvé de manière inattendue qu'il est possible d'atteindre ce but lorsque la polymérisation des diènes conjugués ou la copolymérisation des diènes conjugués avec d'autres diènes conjugués ou des composés vinylaromatiques à l'aide des systèmes catalytiques précités est effectuée en présence d'un agent modificateur qui n'est pas un initiateur de polymérisation ou de copolymérisation.

Ainsi la présente invention concerne un procédé de préparation de polymères de diènes conjugués et de copolymères de diènes conjugués avec d'autres diènes conjugués ou des composés vinylaromatiques, bimodaux ou multimodaux, consistant à faire réagir les monomères à une température comprise entre 20° C et 200° C en présence d'un système catalytique constitué par le produit de réaction d'un compose organique d'un métal du groupe 3A de la classification périodique des éléments du tableau de Mendeléev répondant à l'une des formules suivantes:

$Me_1 M R_1 R_2 R_3 R_4$

$Me_2 [M R_1 R_2 R_3 _4]_2$

$M R_1 R_2 R_3$

$Me_1 O M R_1 R_2$

dans lesquelles $Me_1$ représente un métal alcalin, $Me_2$ représente un métal alcalino-terreux, M un métal du groupe 3 A, $R_1$, $R_2$, $R_3$ représentent un radical alcoyle ou aralcoyle et $R_4$ représente soit un reste alcoyle ou aralcoyle, soit un reste XB dans lequel X représente un atome d'oxygène, de soufre ou d'azote et B soit un radical alcoyle ou aralcoyle, soit un reste $M (R_5 R_6)$ dans lequel $R_5$,

$R_6$ représentent un radical alcoyle ou aralcoyle, avec un ou plusieurs composés donneurs d'électrons renfermant un ou plusieurs hétéroatomes choisis parmi les composés polaires aprotiques, les composés polaires protiques, les composés constitués par le produit de réaction des composés polaires protiques avec un métal alcalin et à ajouter en cours de réaction, lorsque la conversion des monomères est comprise entre 20 % et 90 %, un agent modificateur non initiateur, caractérisé en ce que l'agent modificateur non initiateur de polymérisation ou de copolymérisation, est un composé d'un métal de transition des classes 1B à 7B et 8 de la classification périodique des éléments du tableau de Mendeléev comme défini dans la 59e édition du livre "Handbook of Chemistry and Physics" ou un composé du magnésium de formule: Mg (A)₂ dans laquelle A représente soit un reste alcoyle ayant de 1 à 10 atomes de carbone, soit le reste alcoolats, phénate, β-dicétonate ou carboxylate.

Ce procédé permet de modifier à volonté la distribution dss masses moléculaires et d'obtenir des propriétés de collant à cru, cohésion à cru et travaillabilité sur outil améliorées sans nécessiter des quantités supplémentaires de catalyseur et sans simultanément pénaliser les autres propriétés.

Le procédé conforme à l'invention permet d'obtenir des polymères et des copolymères ayant des distributions bimodales ou multimodales des masses moléculaires. La ou les fraction(s) obtenue(s) après addition de l'agent modificateur sont de bas poids moléculaire. En outre, les masses moléculaires moyennes de cette ou ces fractions de faibles masses moléculaires ainsi que la quantité de ces bas poids moléculaires sont fonction de la nature de l'agent modificateur, de la quantité d'agent modificateur ajouté et du moment auquel cet agent est ajouté lors du déroulement de la polymérisation. La microstructure de la partie diénique des hautes et faibles masses moléculaires est identique ou différente.

Pour un agent modificateur dorrné, il est possible en choisissant la quantité à ajouter et le moment de l'addition en fonction du pourcentage de conversion des monomères à l'instant considéré par rapport au pourcentage de conversion final, de préparer des polymères et copolymères bimodaux ou multimodaux dont on peut régler à volonté la quantité des hauts poids et des bas poids moléculaires ainsi que les masses moléculaires moyennes respectives de ces hauts poids et bas poids moléculaires. Bien que la quantité d'agent modificateur qui est nécessaire dépend de la nature de celui-ci et de l'ampleur de la modification de la distribution des masses moléculaires recherchée, il est souhaitable d'en utiliser des quantités telles que le rapport molaire du composé agent modificateur/composé organométallique du groupe 3A soit compris entre 0,01 et 20.

En fonction de la nature de l'agent modificateur utilisé, il est possible dans la fraction des bas poids moléculaires soit de conserver la même microstructure que celle de la fraction des hauts poids moléculaires qui dépend entièrement du catalyseur utilisé, ce qui est le cas par exemple lorsqu'on utilise des composés dialcoyles magnésium, soit de diminuer le pourcentage d'enchaînements trans 1,4 ce qui est le cas par exemple avec les composés du magnésium autres que les dérivés dialcoylés. Enfin, l'agent modificateur permet dans de nombreux cas d'accroître la cinétique de la réaction de polymérisation bien qu'il ne soit pas par lui-même un initiateur.

L'agent modificateur est ajouté en cours de réaction lorsque la conversion des monomères est comprise entre 20 % et 90 %. Le procédé peut être réalisé en masse ou en solution dans un solvant hydrocarboné soit en discontinu, soit en continu. Dans ce dernier cas, on opère dans deux ou plusieurs réacteurs placés en série, à des températures de polymérisation identiques ou différentes. Selon l'importance de l'effet désiré, l'agent modificateur est ajouté en une ou plusieurs fois.

Comme exemples représentatifs des composés magnésiens modificateurs on peut citer à titre de composés dialkyles magnésiens le dioctylmagnésium, le di-butyl-magnésium, le di-sec-butyl-magnésium, le n-butyl-sec-butyl-magnésium, le sec-butyl-ethyl-magnésium, le butyl-octyl-magnésium. Parmi les composés du magnésium ne possédant pas de liaison carbonemétal, on peut citer les alcoolates, phénates, β-dicétonates, carboxylates et en particulier les éthers alcoolates de magnésium répondant à la formule:

Mg [O (CH₂ CH₂ O)ₙ R ]₂ où n est un nombre entier et dans laquelle R est un reste alcoyle inférieur. Ceux-ci ont l'avantage d'être solubles dans les solvants aliphatiques et aromatiques. En ce qui concerne les métaux de transition utilisables comme agents modificateurs, tous les métaux de transition peuvent être utilisés et à n'importe quel degré de valence. Conviennent cependant particulièrement les métaux de transition sous forme de sels organiques et notamment les alcoolates, phénates, β - dicétonates et carboxylates.

On utilise préférentiellement à titre de métal de transition le manganèse, le fer, le cobalt sous forme Co.II, le cuivre sous forme CuI, le zinc, le nickel.

Dans le procédé conforme à l'invention on peut utiliser à titre de solvant hydrocarboné des solvants aliphatiques comme l'hexane ou l'heptane ou aromatiques comme par exemple le benzène, le toluène.

Les composés organométalliques d'un métal du groupe 3A qui conviennent particulièrement à titre de constituants du système catalytique sont ceux dans lesquels le métal alcalin est le lithium, le sodium ou le potassium et ceux dans lesquels le métal alcalino-terreux est le magnésium, le calcium, le strontium, le baryum. A titre d'exemples, on peut citer les composés suivants:
Al (CH$_3$)$_3$, Al (C$_2$H$_5$)$_3$, Al (i - C$_4$H$_9$)$_3$,
Li [Al (C$_2$H$_5$)$_4$ ], Na [Al (C$_2$H$_5$)$_4$ ], K [Al (C$_2$H$_5$)$_4$],
Li [Al (C$_2$H$_5$)$_3$ O C$_2$H$_5$], Li [Al (C$_2$H$_5$)$_3$O Al (C$_2$H$_5$)$_2$],
Mg [Al (C$_2$H$_5$)$_4$ ]$_2$, C$_2$H$_5$ Mg Al (C$_2$H$_5$)$_4$. Ca [Al (C$_2$H$_5$)$_4$ ] $_2$,
Sr [Al (C$_2$H$_5$)$_4$] $_2$, Ba [Al (C$_2$H$_5$)$_4$] $_2$, Ba [Al (C$_2$H$_5$)$_3$ O C$_2$H$_5$] $_2$,
Ba [Al - (iso C$_4$H$_9$)$_4$] $_2$, Li O Al (C$_2$H$_5$)$_2$ Na O Al (C$_2$H$_5$)$_2$,
B (CH$_3$)$_3$, B (C$_2$H$_5$)$_3$, Li B (C$_2$H$_5$)$_4$, Li B (C$_2$H$_5$)$_3$ C$_4$H$_9$, Ga (C$_2$H$_5$)$_3$,
In (C$_2$H$_5$)$_3$, Tl (C$_2$H$_5$)$_3$.

A titre de composés polaires aprotiques conviennent notamment les éthers et particulièrement les éthers cycliques comme le tétrahydrofuranne, le dioxanne ainsi que les thioethers correspondants, les amines tertiaires telles que la N, N, N', N'-tétraméthyl-éthylène-diamine, les amines aromathes et notamment les dérivés de pyridine et les oxydes correspondants, les composés phosphorés tels que les phosphines et leurs oxydes, les phosphites, les phosphoramides et notamment l'hexaméthyl-phosphorotriamide, les cétones et particulièrement l'acétone, les nitriles et particulièrement l'acétonitrile, les aldéhydes, les esters, les amides, les composés nitro-aliphatiques ou aromatiques, les sulfoxydes et notamment le diméthyle sulfoxyde, les sulfones, les sulfites.

A titre de composés polaires protiques conviennent notamment l'eau, les alcools et particulièrement le méthanol, les amines primaires ou secondaires, les thiols.

A titre de composés des produits de réaction des composés polaires protiques avec un métal alcalin ou alcalinoterreux conviennent particulièrement les alcoolates et les phénates de métaux alcalins ou alcalino-terreux, les mercaptates et thiophénates alcalins ou alcalino-terreux, ainsi que les composés éther-alcoolates et amine-alcoolates. Le procédé selon l'invention convient notamment pour la polymérisation de diènes conjugués et la copolymérisation de diènes conjugués entre eux ou avec des composés vinylaromatiques.

Comme exemples représentatifs de diènes conjugués conviennent notamment le butadiène-1,3, l'isoprène, le 2,3-diméthyl-butadiène 1,3, le pentadiène-1,3, le méthyl-2-penta-diène-1,3, l'hexadiène 2,4.

Comme exemples représentatifs de composés vinylaromatiques conviennent notamment: le styrène, l'ortho-, méta-, para-méthylstyrène, le "Vinyl-toluène", les di- et poly-méthyl styrènes, le p-tertiobutyl styrène, les vinylnaphtalènes, les methoxystyrènes, les halogénostyrènes, le vinylmésitylène, le divinyl benzène.

Les exemples non limitatifs suivants sont donnés à titre d'illustration de l'invention. Dans ces exemples, les viscosités inhérentes sont établies à 25° C en solution à 1g/litre dans le toluène; les concentrations en composés constituant la composition catalytique et l'agent modificateur sont exprimés en micromoles pour 100 g de monomères. Les pourcentages en enchaînements trans, et respectivement 1, 2 sont exprimés par rapport à la partie polybutdiénique et le pourcentage de styrène est exprimé par rapport à la quantité totale de copolymère obtenu.

Dans tous les exemples, les essais 1 sont des essais comparatifs témoins, tandis que les autres essais illustrent l'invention.

Le temps écoulé entre le début de la réaction et le moment où l'on ajoute l'agent modificateur est désigné dans les exemples par "temps écoulé" et le pourcentage dè conversion atteint au moment de l'addition de l'agent modificateur est désigné par "% conv.". Les figures représentent la distribution des masses moléculaires des polymères et coplymères obtenus à l'issue de la réaction qui a été obtenue par chromatographie par permétion de gel. On a représenté en abscisse les masses moléculaires et en ordonnée une différence d'indice de réfraction Δ i.

**Exemple 1**

On réalise 4 essais. Dans des bouteilles Steinie de 250 ml sous pression d'azote rectifié on introduit 100 ml d'heptane à titre de solvant, 3,1 g de styrène et 10,5 g de butadiène. On ajoute alors dans l'ordre le système catalytique constitué par Li Al Et$_3$ Bu et [ Et (O CH$_2$CH$_2$) $_2$O] $_2$ Ba. Les bouteilles sont placées dans un bac thermostaté à 75° où elles sont agitées. Dans trois bouteilles on ajoute en cours de polymérisation du n-butyl-Mg-sec-butyl. Après 2 heures toutes les polymérisations sont stoppées par addition de méthanol et le polymère est récupé de façon classique. Les résultats sont consignés dans le tableau I. Les copolymères des essais 2 à 4 sont conformes à l'invention en comparaison du copolymère témoin de l'essai 1.

L'addition de l'agent modificateur permet de faire des bas poids. La valeur des bas poids dépend de la quantité d'agent modifcateur ajoutée que leur proportion par rapport aux hauts poids dépend à la fois du pourcentage de conversion auquel on a ajouté R$_2$ Mg et du pourcentage de conversion final.

**Exemple 2**

On réalise deux essais selon le même mode opératoire qu'à l'exemple 1 en utilisant comme agent modificateur l'éthyldiglycolate de magnésium dans l'un des essais. Les résultats sont consignés dans le tableau II. Le copolymère de l'essai 2 est conforme à l'invention en comparaison du copolymère témoin de l'essai 1.

**Exemple 3**

On réalise deux essais. Dans des bouteilles Steinie de 250 ml sous pression d'azote rectifié on introduit 100 ml de toluène et 17,5 g de monomères à raison de 77 % poids de butadiène et 23 % de styrène. On ajoute alors dans l'ordre le système catalytique par Li Al Et$_3$ Bu et Et(O CH$_2$CH$_2$)$_2$O Li. Les bouteilles sont ensuite placées dans un bac thermostaté à 75° C où elles sont agitées. Dans l'une des bouteilles on ajoute en cours de polymérisation du n-Butyl-Mg-sec-Butyl. Après 2 heures les polymérisations sont stoppées par addition de méthanol et le polymère est récupéré de facon classique. Les résultats sont consignés dans le tableau III. L'addition de l'agent modificateur induit des bas poids moléculaires sans modifier la microstructure du polymère final.

**Exemple 4**

On réalise trois essais. Dans des bouteilles Steinie de 250 ml sous pression d'azote rectifié on introduit successivment 128 ml d'heptane et 17,5 g de monomère dont 77 % en poids de butadiène et 23 % en poids de styrène. On ajoute alors dans l'ordre le système catalytique constitué par Ba[ Al Et$_4$ ]$_2$ et Et (O CH$_2$Ch$_2$) O Li. Les bouteilles sont ensuite placées dans un bac thermostaté à 80° C où elles sont agitées. Dans deux bouteilles on ajoute en cours de polymérisation soit du n. Butyl-Mg-sec-Butyl soit de l'éthyl diglycolate de Mg [ 0 (CH$_2$CH$_2$O )$_2$Et ] $_2$. Après 1 heure 30, toutes les polymérisations sont stoppées par addition de méthanol et le polymère est récupéré de façon habituelle. Les résultats sont consignés dans le tableau IV.

L'introduction de Mg (OR) $_2$ ou Mg R$_2$ en cours de polymérisation induit des basses viscosités et des distributions du type bimodal. Le copolymère bimodal obtenu dans l'essai N° 2 est constitué par 55 % d'une fraction de hauts poids moléculaires de viscosité moyenne de 1,4 et par 45 % d'une fraction de bas poids moléculaire de 0,75. La microstructure de la partie hauts et bas poids est respectivement de:1,2: 3 %, trans:84 %,styrène: 9 %:1,2: 3 %, trans: 83 %, styrène: 18 %. Les copolymères bimodaux des essais 2 et 3 sont conformes à l'invention en comparaison du copolymère témoin de l'essai 1.

**Exemple 5**

On réalise deux essais. Dans des bouteilles Steinie de 250 ml sous pression d'azote rectifié on introduit 100 $_m$1 d'heptane à titre de solvant et 13,6 g de butadiène. On ajoute alors dans l'ordre le système catalytique consitué par:
- le triéthylaluminium Al Et$_3$
- le nonylphénate de baryum, Ba (OR)$_2$
- l'isopropylate de lithium, R O Li.

Les bouteilles sont ensuite placées dans un bac thermostaté à 80° C et agitées.

Dans l'une des bouteilles on ajoute en cours de polymérisation du n-butyl-Mg-sec-butyl. Après 2 heures 30, la polymérisation est stoppée dans la bouteille témoin alors que la bouteille de l'essai 2 est stoppée après 1 heure 30 par addition de méthanol. Le polymère est alors récupéré de façon habituelle. Les résultats sont consignés dans le tableau V.

On constate:.
- que l'addition de R$_2$ Mg accélère la vitesse de polymérisation et induit des bas poids moléculaires.

**Exemple 6**

On réalise trois essais. Dans des bouteilles Steinie de 250 ml sous pression d'azote rectifié on introduit 100 ml d'heptane à titre de solvant, 2,72 g de styrène et 10,9 g de butadiène. On ajoute alors dans l'ordre le système catalytique constitué par:
- Li B Bu$_4$ (tétrabutyle de lithium et de bore),
-[Et (0 CH$_2$CH$_2$)$_2$O ] $_2$ Ba(éthyldiglycolate de baryum).

Les bouteilles sont ensuite placées dans un bac thermostaté à 80° C puis agitées. Dans certaines bouteilles (essais 2 et 3) on ajoute en cours de polymérisation du Et - Mg sec.Bu. Après 2 heures toutes les polymérisations sont stoppées par addition de méthanol. Le polymère est alors récupéré de façon habituelle. Les résultats sont consignés dans le tableau VI. Les copolymères des essais 2 et 3 sont conformes à l'invention en comparaison du copolymère témoin de l'essai 1.

**Exemple 7**

On effectue trois essais; dans des bouteilles Steinie de 250 ml sous pression d'azote rectifié on introduit 130 ml d'heptane et 17,5 g de butadiène. On ajoute alors dans l'ordre le système catalytique constitué par: - Al Et$_3$,
- éthylglycolate de baryum [Et (O CH$_2$CH$_2$)$_1$ O]$_2$ Ba.

Les bouteilles sont ensuite placées dans un bac thermostaté à 80° C où elles sont agitées.

Dans certaines bouteilles (essais 2 et 3) on ajoute en cours de polymérisation du n-Butyl-Mg-sec-Butyl. Au bout de 24 heures toutes les polymérisations sont stoppées par addition de méthanol en quantité convenable. Le polymère est alors récupéré de façon habituelle. Les résultats sont consignés dans le tableau VII.

**Exemple 8**

On répète le mode opératoire de l'exemple 7 si ce n'est qu'on utilise 100 ml de toluène et 17,5 g de butadiène et que le système catalytique est constitué par:
- Al Et$_3$
- isopropylate de lithium.

Les résultats obtenus sont consignés dans le tableau VIII.

**Exemple 9**

On réalise trois essais. Dans des bouteilles Steinie de 250 ml sous pression d'azote rectifié on introduit 87,5 g de toluène parfaitement pur puis 17,5 g de monomères à raison de 4,86 ml de styrène et 13,10 ml de butadiène. On ajoute ensuite le système catalytique constitué par:
- Ba [Al Et$_4$ ]$_2$
- γ picoline.

Les bouteilles sont ensuite placées dans un bac thermostaté à 80° C où elles sont agitées. Dans certaines bouteilles (essais 2 et 3) on ajoute en cours de polymérisation du n.Bu.Mg sec.Bu. Après 5 heures toutes les polymérisations sont stoppées par addition de méthanol en quantité convenable. Le polymère est alors récupéré de façon habituelle. Les résultats sont consignés dans le tableau IX. Les copolymères des essais 2 et 3 sont conformes à l'invention en comparaison du copolymère témoin de l'essai 1.

**Exemple 10**

On effectue 2 essais. Dans des bouteilles Steinie sous pression d'azote rectifié on introduit 87,5 g d'heptane et 17,5 g de butadiène. On ajoute alors le système catalytique constitué par:

- Li O Al Et$_2$
- Et (O OH$_2$ CH$_2$)$_2$ O Na.

Les bouteilles sont ensuite placées dans un bac thermostaté à 80° C où elles sont agitées. Dans l'essai 2 on introduit en cours de polymérisation du n-Butyl-Mg-sec-Butyl. Après 5 heures les polymérisations sont stoppées par addition de méthanol. Le polymère est alors récupéré de façon habituelle. Les résultats sont consignés dans le tableau X.

### Exemple 11

On effectue deux essais. Dans des bouteilles Steinie sous pression d'azote rectifié on introduit 70 g d'heptane préalablement purifié et 17,5 g de monomères à raison de 1,9 ml de styrène et 23,8 ml de butadiène. On introduit ensuite le système catalytique constitué par:.
- Ba [A1 Et$_4$ ]$_2$
- tétrahydrofuranne.

Les bouteilles sont ensuite placées dans un bac thermostaté à 80° C où elles sont agitées. Dans la bouteille de l'essai 2, on ajoute en cours de polymérisation du Butyl-Mg-octyle. Les polymérisations sont stoppées au bout de 2 heures 30 par addition de méthanol. Le polymère est ensuite récupéré de façon habituelle. Les résultats obtenus sont consignés dans le tableau XI. Le copolymère de l'essai 2 est conforme à l'invention en comparaison du copolymère témoin de l'essai 1.

### Exemple 12

On réalise deux essais en répétant les conditions opératoires de l'exemple 11, si ce n'est qu'on utilise Mg [0 (CH$_2$ CH$_2$ 0)$_2$ Et] $_2$ à titre d'agent modificateur. Les résultats obtenus sont consignés dans le tableau XII.

### Exemple 13

On réalise trois essais. Dans des bouteilles Steinie de 250 ml sous pression d'azote on introduit 100 ml de toluène puis 16,2 ml de butadiène et 7,75 ml de styrène. On ajoute alors dans n'importe quel ordre le système catalytique constitué par:
- Li Al Bu i-Bu$_3$;(Li Al R$_4$)
- [C$_2$H$_5$ (O CH$_2$ CH$_2$)$_2$ O ]$_2$ Ba;Ba(OR)$_2$

Les bouteilles sont ensuite placées dans un bac thermostaté à 75° C où elles sont agitées.

Dans les essais 2 et 3 on ajoute en cours de polymérisation de l'éthyldiglycolate de cuivre (I) de formule C$_2$H$_5$ (O CH$_2$ CH$_2$)$_2$ O Cu.

Au bout de 2h 30 toutes les polymérisations sont stoppées par addition de méthanol et on récupère les polymères de façon classique. Les résultats sont consignés dans le tableau XIII. Les copolymères des essais 2 et 3 sont conformes à l'invention en comparaison du copolymère témoin de l'essai 1.

### Exemple 14

On réalise deux essais. Dans des bouteilles Steinie de 250 ml sous pression d'azote on introduit 100 ml de toluène et 17,5 g de butadiène. On ajoute alors dans n'importe quel ordre le système catalytique constitue par Ba [ Al (C$_2$H$_5$)$_4$] $_2$ et de l'éthyldiglycolate de lithium, C$_2$H$_5$ (O CH$_2$ CH$_2$)$_2$ O Li.

Les bouteilles sont ensuite placées dans un bac thermostaté à 80° C où elles sont agitées.

Dans l'essai 2 on ajoute en cours de polymérisation de l'acétylacétonate de cobalt (II). Au bout d'une heure toutes les réactions sont stoppées par addition de méthanol et on récupère les polymères de façon classique. Les résultats obtenus sont consignés dans le tableau XIV.

### Tableau I

| Essai | Système catalytique | | Addition R$_2$ Mg | | | % Conversion final | Copolymère | | | | |
|---|---|---|---|---|---|---|---|---|---|---|---|
| | Li Al R$_4$ | Ba (OR)$_2$ | temps | % conv. au temps écoulé | quantité | | viscosité | % 1—2 | % trans | % Styrène | GPC fig. |
| 1 | 1617 | 735 | | | | 62 | 2,34 | 2,5 | 85 | 11 | 1.1 |
| 2 | 1617 | 735 | 1h | 45 | 735 | 72 | 1,8 | 3 | 84 | 13 | 1.2 |
| 3 | 1617 | 735 | 1h | 45 | 1470 | 70 | 1,67 | 3 | 83 | 12 | 1.3 |
| 4 | 1617 | 735 | 1h30 | 55 | 735 | 67 | 2,16 | 3 | 84 | 11 | 1.4 |

### Tableau II

| Essai | Système catalytique | | Addition Mg(OR)$_2$ | | | % Conversion final | Copolymère | | | | |
|---|---|---|---|---|---|---|---|---|---|---|---|
| | Li Al R$_4$ | Ba (OR)$_2$ | temps écoulé min | % conv. au temps écoulé | quantité | | viscosité | % 1—2 | % trans | % Styrène | GPC fig. |
| 1 | 2265 | 1030 | | | | 70 | 2,0 | 2,5 | 85,5 | 12 | 2.1 |
| 2 | 2265 | 1030 | 50 | 47 | 412 | 60 | 1,55 | 3,5 | 82 | 10 | 2.2 |

### Tableau III

| Essai | Système catalytique | | addition de $R_2$ Mg | | | % conv. final | Copolymère | | | | |
|---|---|---|---|---|---|---|---|---|---|---|---|
| | Li Al $R_4$ | Li OR | Temps écoulé | % conv. | quantité | | visco-sité | % 1—2 | % trans | % Sty-rène | GPC fig. |
| 1 | 1700 | 850 | | | | 85 | 2,65 | 12 | 52 | 6 | 3.1 |
| 2 | 1700 | 850 | 1h | 55 | 400 | 77 | 1,85 | 12 | 52 | 5 | 3.2 |

### Tableau IV

| Essai | Système catalytique | | addition de $MgR_2$(a) $Mg(OR)_2$ (b) | | | | % conv. final | Copolymère | | | | |
|---|---|---|---|---|---|---|---|---|---|---|---|---|
| | Ba $(AlR)_4)_2$ | ROLi | Temps écoulé min | % conv. | quantité (a) | (b) | | visco-sité | % 1—2 | % trans | % Sty-rène | GPC fig. |
| 1 | 1000 | 1500 | | | | | 75 | 1,6 | 2,6 | 85 | 13 | 4.1 |
| 2 | 1000 | 1500 | 30 | 47 | 1000 | | 85 | 1,1 | 3 | 82 | 14 | 4.2 |
| 3 | 1000 | 1500 | 30 | 57 | | 250 | 65 | 1,3 | 4 | 81 | 11 | 4.3 |

### Tableau V

| Essai | Système catalytique | | | addition de $R_2$ Mg | | | % Conv. final | Polymère | | | |
|---|---|---|---|---|---|---|---|---|---|---|---|
| | $AlEt_3$ | Ba $(OR)_2$ | Li OR | temps écoulé | % Conv | quantité | | Visco-sité | % 1—2 | % trans | GPC fig. |
| 1 | 2600 | 650 | 3250 | | | | 60 | 1,52 | 4 | 75 | 5.1 |
| 2 | 2600 | 650 | 3250 | 1h | 25 | 1950 | 85 | 0,81 | 4,5 | 76 | 5.2 |

### Tableau VI

| Essai | Système catalytique | | addition de $R_2$ Mg | | | % Conv. final | Go Polymère | | | | |
|---|---|---|---|---|---|---|---|---|---|---|---|
| | LiB Bu$_4$ | Ba $(OR)_2$ | temps écoulé | % Conv. | quantité | | visco-sité | % 1—2 | % trans | % sty-rène | GPC fig. |
| 1 | 4000 | 1333 | | | | 72 | 1,88 | 3 | 83 | 14 | 6.1 |
| 2 | 4000 | 1333 | 1h | 58 | 1333 | 79 | 1,27 | 3 | 82 | 15 | 6.2 |
| 3 | 4000 | 1333 | 1h | 58 | 2666 | 77 | 1,23 | 3,5 | 81 | 15 | 6.3 |

## Tableau VII

| Essai | Système catalytique | | addition de R$_2$ Mg | | | % Conv. final | Polymère | | | |
|---|---|---|---|---|---|---|---|---|---|---|
| | Al Et$_3$ | Ba (OR)$_2$ | temps écoulé | % conv. | quantité | | viscosité | % 1—2 | % trans | GPC fig. |
| 1 | 3000 | 1500 | | | | 70 | 1,4 | 5 | 65 | 7.1 |
| 2 | 3000 | 1500 | 8h | 50 | 4500 | 100 | 0,67 | 5,2 | 74 | 7.2 |
| 3 | 3000 | 1500 | 8h | 50 | 9000 | 100 | 0,69 | 5,6 | 73 | 7.3 |

## Tableau VIII

| Essai | Système catalytique | | addition de R$_2$ Mg | | | % conv. final | Polymère | | | |
|---|---|---|---|---|---|---|---|---|---|---|
| | Al Et$_3$ | R O Li | temps écoulé | % conv. | quantité | | viscosité | % 1—2 | % trans | GPC fig. |
| 1 | 3000 | 4500 | | | | 82 | 0,89 | 12 | 52 | 8.1 |
| 2 | 3000 | 4500 | 9h | 46 | 4500 | 100 | 0,51 | 14 | 51 | 8.2 |
| 3 | 3000 | 4500 | 9h | 46 | 9000 | 96 | 0,48 | 17 | 47 | 8.3 |

## Tableau IX

| Essai | Système catalytique | | addition de R$_2$ Mg | | | % Conv. final | Copolymère | | | | |
|---|---|---|---|---|---|---|---|---|---|---|---|
| | Ba [AlEt$_4$]$_2$ | γpicoline | temps écoulé | % conv. | quantité | | viscosité | % 1—2 | % trans | % styr. | GPC fig. |
| 1 | 400 | 400 | | | | 60 | 1,47 | 5,4 | 66,1 | 23 | 9.1 |
| 2 | 400 | 400 | 50 mir | 27 | 600 | 55 | 1,11 | 5,4 | 70 | 20 | 9.2 |
| 3 | 400 | 400 | 50 mir | 27 | 1200 | 55 | 0,98 | 6,3 | 70 | 20 | 9,3 |

## Tableau X

| Essai | Système catalytique | | addition de R$_2$ Mg | | | % conv. final | Polymère | | | |
|---|---|---|---|---|---|---|---|---|---|---|
| | LiO AlEt$_2$ | NA OR | temps écoulé | % conv. | quantité | | viscosité | % 1—2 | % trans | GPC fig. |
| 1 | 2200 | 2750 | | | | 70 | 0,9 | 63 | 19 | 10.1 |
| 2 | 2200 | 2750 | 1h 30 | 20 | 6600 | 100 | 0,35 | 27 | 45 | 10.2 |

## Tableau XI

| Essai | système catalytique | | addition de R₂ Mg | | | % conv. final | Copolymère | | | | |
|---|---|---|---|---|---|---|---|---|---|---|---|
| | Ba [AlEt₄]₂ | THF | temps écoulé | % conv. | quantité | | visco-sité | % 1—2 | % trans | % styr. | GPC fig. |
| 1 | 1150 | 4600 | | | | 88 | 2,3 | 3,5 | 80 | 5 | 11.1 |
| 2 | 1150 | 4600 | 1h 30 | 56 | 1150 | 86 | 1,7 | 4 | 79 | 4 | 11.2 |

## Tableau XII

| Essai | système catalytique | | addition de Mg (OR)₂ | | | % conv. final | Copolymère | | | | |
|---|---|---|---|---|---|---|---|---|---|---|---|
| | Ba [AlEt₄]₂ | THF | temps écoulé | % conv. | quantité | | visco-sité | % 1—2 | % trans | % styr. | GPC fig. |
| 1 | 1150 | 4600 | | | | 80 | 2,47 | 4 | 79 | 4 | 12.1 |
| 2 | 1150 | 4600 | 1h | 40 | 1150 | 85 | 1,7 | 4 | 77 | 5 | 12.2 |

## Tableau XIII

| Essai | système catalytique | | addition de sel de CuI | | | % Conv. final | Copolymère | | | | |
|---|---|---|---|---|---|---|---|---|---|---|---|
| | LiAlR₄ | Ba (OR)₂ | temps écoulé | % conv. | quantité ajoutée | | visco-sité | % 1—2 | % trans | % styréne | GPC fig. |
| 1 | 1486 | 743 | | | | 80 | 2 | 4,5 | 80 | 26 | 13.1 |
| 1 | 1486 | 743 | 30 min | 30 | 57 | 84 | 1,4 | 5,1 | 79 | 30 | 13.2 |
| 1 | 1486 | 743 | 30 min | 30 | 286 | 90 | 1,2 | 6,1 | 78 | 33 | 13.3 |

## Tableau XIV

| Essai | système catalytique | | addition du sel de CoII | | | % Conv. final | Polymère | | | |
|---|---|---|---|---|---|---|---|---|---|---|
| | Ba (AlEt₄)₂ | RoLi | temps écoulé | % Conv. | quantité ajoutée | | viscosité | % 1—2 | % trans | GPC fig. |
| 1 | 1140 | 2280 | | | | 85 | 2,3 | 3 | 81 | 14.1 |
| 2 | 1140 | 2280 | 15 min | 40 | 60 | 85 | 1,9 | 3 | 81 | 14.2 |

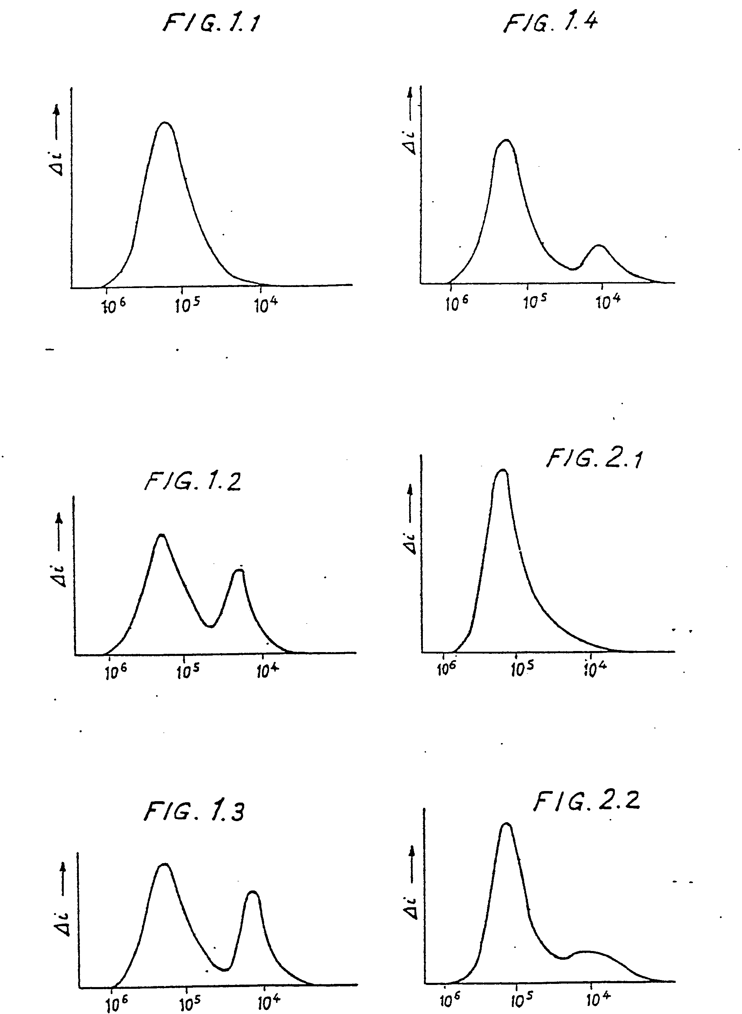

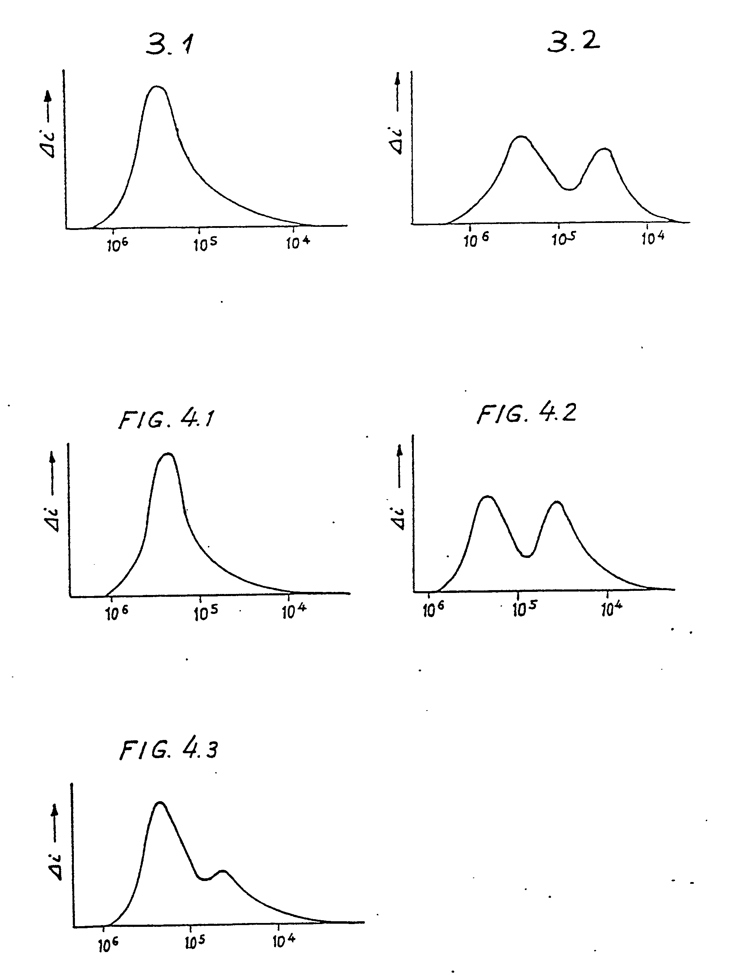

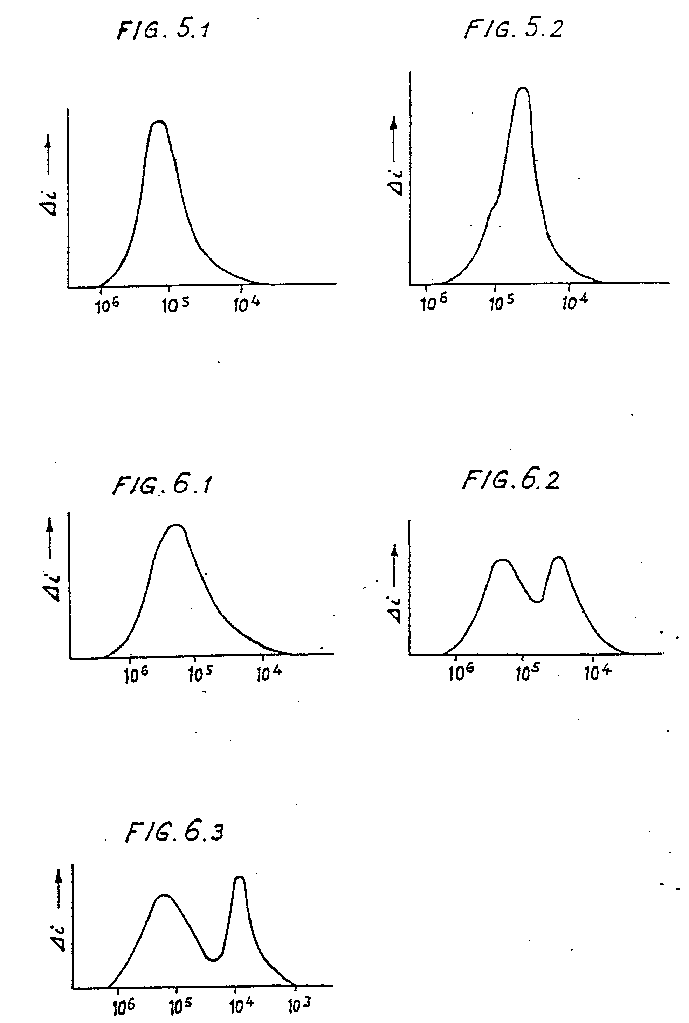

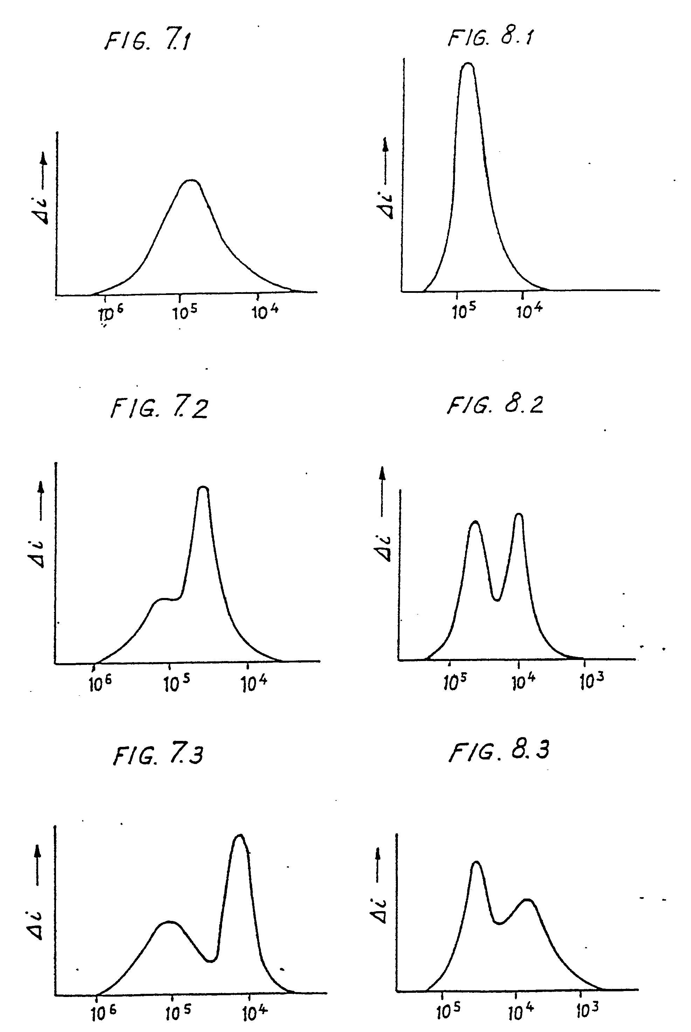

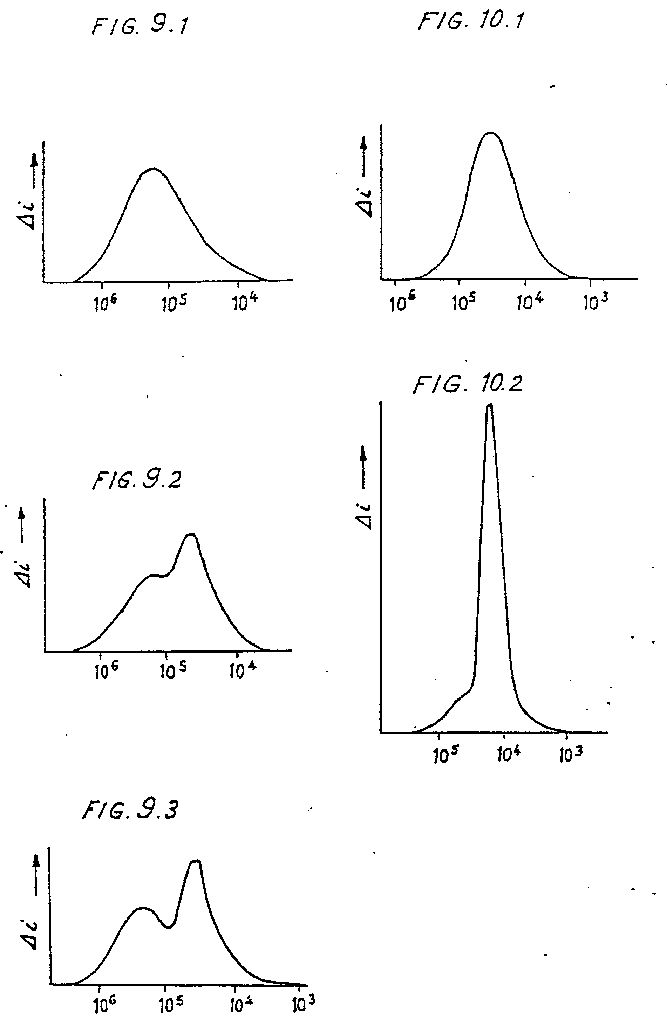

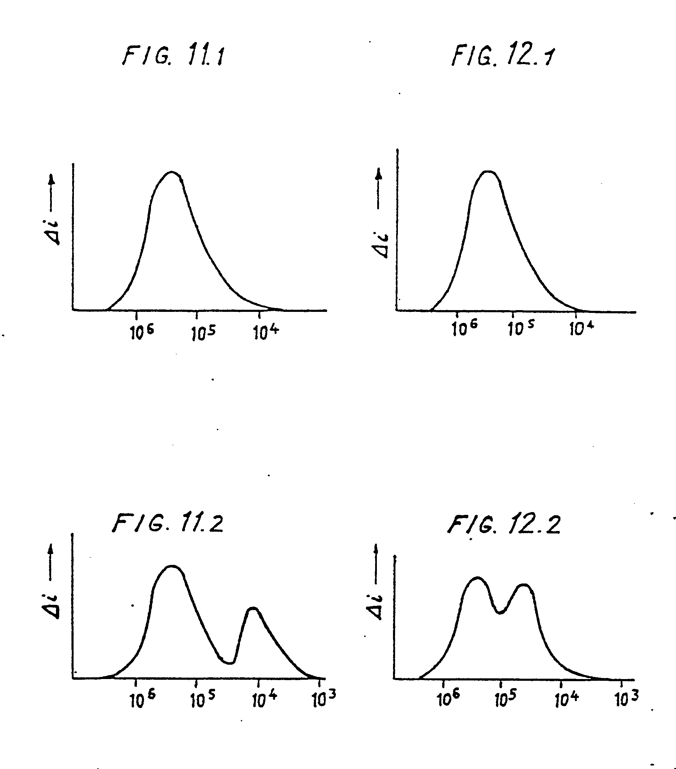

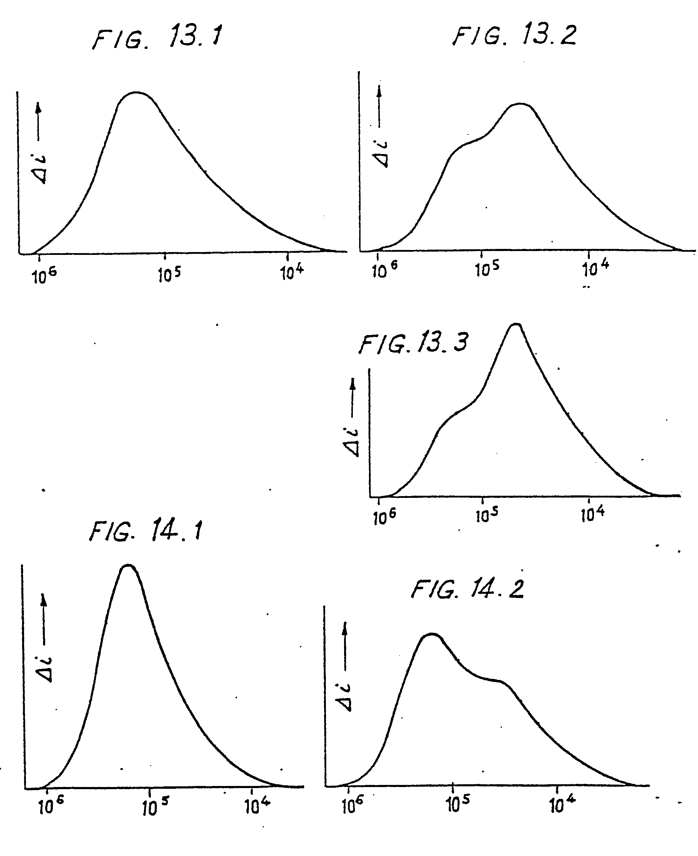

## Revendications

1. Procédé de préparation d'homopolymères bimodaux ou multimodaux de diènes conjugués et de copolymères bimodaux ou multimodaux de diènes conjugués entre eux ou avec des composés vinylaromatiques consistant à faire réagir les monomères à une température comprise entre 20° C et 200° C en présence d'un système catalytique constitué par le produit de réaction (a) d'un composé organique d'un métal du groupe 3 A de la classification périodique des éléments du tableau de Mendeléev répondant à l'une des formules suivantes:

$Me_1$ M $R_1$ $R_2$ $R_3$ $R_4$
$Me_2$ [M $R_1$ $R_2$ $R_3$ $R_4$ ]$_2$
M $R_1$ $R_2$ $R_3$
$Me_1$ O M $R_1$ $R_2$

dans laquelle $Me_1$ représente un métal alcalin, $Me_2$ représente un métal alcalino-terreux, M un métal du groupe 3, A, $R_1$, $R_2$, $R_3$ représentent un radical alcoyle ou aralcoyle et $R_4$ représente soit un reste alcoyle ou aralcoyle, soit un reste XB dans lequel X représente un atome d'oxygène, de soufre ou d'azote et B soit un radical alcoyle ou aralcoyle, soit un reste M($R_5$ $R_6$) dans lequel $R_5$, $R_6$ représentent un radical alcoyle ou aralcoyle, avec (b) un ou plusieurs composés donneurs d'électrons renfermant un ou plusieurs hétéroatomes choisis parmi la classe des composés polaires aprotiques, la classe des composés polaires protiques, la classe des composés constitués par le produit de réaction des composés polaires protiques avec un métal alcalin et à ajouter en cours de réaction lorsque la conversion des monomères est comprise entre 20 % et 90 %, un agent modificateur non initiateur, caractérisé en ce que l'agent modificateur est (i) un composé d'un métal de transition des groupes 1B à 7B et 8 de la classification périodique des éléments ou (ii) un composé du magnésium de formule genérale Mg (A)$_2$ dans laquelle A représente unradical alcoyle ayant de 1 à 10 atomes de carbone ou le reste alcoolate, phénate, β-dicétonate, carboxylate.

2. Procédé selon la revendication 1, caractérisé en ce que le métal de l'agent modificateur est choisi parmi les métaux de transition suivante: le manganèse, le fer, le cobalt, le cuivre.

3. Procédé selon l'une quelconque des revendications 1 et 2, caractérisé en ce que le métal de transition est sous forme d'alcoolate, phénate, β-dicétonate ou carboxylate.

4. Procédé selon la revendication 1, caractérisé en ce que l'agent modificateur est choisi parmi le n-butyl, secbutyl-magnésium, l'éthyldiglycolate de magnésium, l'éthyl,

5. Procédé selon l'une quelconque des revendications 1 à 4, caractérisé en ce que l'agent modificateur est présent en quantité telle que le rapport molaire agent modificateur/composé du groupe 3A est compris entre 0,01 et 20.

6. Procédé selon l'une quelconque des revendications 1 à 5, caractérisé en ce qu'on opère en présence d'un solvant hydrocarboné.

7. Procédé selon l'une quelconque des revendications 1 à 6, caractérisé en ce qu'on opère en continu.

8. Copolymères de diènes conjugués entre eux ou avec un ou plusieurs composé(s) vinylaromatique(s) caractérisé par:
- une distribution bimodale ou multimodale des masses moléculaires;
- une teneur globale en enchaînements 1,4-trans comprise entre 70 % et 84 %;
- une teneur globale en enchaînements 1,2 égale ou inférieure à 6,3 %;
- une viscosité inhérente globale comprise entre 2,16 et 0,98;
- une teneur globale de l'autre diène conjugué ou du ou des composé(s) vinylaromatique(s) comprise entre 4 % et 33 % en poids;
- une teneur globale en hauts poids moléculaires comprise entre 10 % et 90 % en poids.

9. Copolymères selon la revendication 8, caractérisés en ce que la microstructure de la partie butadiénique des hautes masses moléculaires et des basses masses moléculaires est identique ou différente.

## Claims

1. A process of preparing bimodal or multimodal homopolymers of conjugated dienes or bimodal or multimodal copolymers of a conjugated diene with other conjugated diene(s) or with vinyl aromatic compound(s), consisting in polymerizing the monomer(s) at a temperature of between 20° C and 200° C in the presence of a catalyst system formed of the reaction product of:

a) an organic compound of a metal of group 3A of the periodic classification of elements of the Mendeleev Table having one of the following formulas:

$Me_1$ M $R_1$ $R_2$ $R_3$ $R_4$
$Me_2$ [M $R_1$ $R_2$ $R_3$ $R_4$]$_2$
M $R_1$ $R_2$ $R_3$
$Me_1$ O M $R_1$ $R_2$

in which $Me_1$ represents an alkali metal, $Me_2$ represents an alkaline earth metal, M represents a metal of group 3A, $R_1$, $R_2$, $R_3$ represent an alkyl or aralkyl radical and $R_4$ represents either an alkyl or aralkyl radical or a radical XB in which X represents an oxygen, sulfur or nitrogen atom and B represents an alkyl or aralkyl radical or a radical M($R_5$ $R_6$) in which $R_5$, $R_6$ represent an alkyl or aralkyl radical, with

b) at least one electron-donor compound containing at least one heteroatom selected from the group consisting of aprotic polar compounds, protic polar compounds and compounds formed of the reaction products of the protic polar compounds with an alkali metal and adding during the course of ths reaction when the conversion of the monomers is between 20 % and 90 %, a modifying agent which is not a polymerization initiator, characterized by the fact that the modifying agent is

i) a compound of a transition metal of groups 1B to 7B and 8 of the periodic classification of elements of the Mendeleev Table, or

ii) a magnesium compound of the general formula Mg(A)₂ in which A represents an alkyl radical having from 1 to 10 carbon atoms or an alcoholate, phenate, beta-diketonate or carboxylate radical.

2. A process according to claim 1, characterized by the fact that the modifying agent is selected from among compounds of the following traneition metals: manganese, iron, cobalt, copper.

3. A process according to claim 1 or 2, characterized by the fact that the compound of the transition metal is an alcoholate, phenate, beta-diketonate or carboxylate.

4. A process according to claim 1, characterized by the fact that the modifying agent is selected from among n-butyl sec-butyl magnesium, magnesium ethyldiglycolate and ethyl sec-butyl magnesium.

5. A process according to claims 1 to 4, characterized by the fact that the modifying agent is added in such amount that the molar ratio of the modifying agent to the organic compound of the metal of group 3A is between 0.01 and 20.

6. A process according to claims 1 to 5, characterized by the fact that the polymerization is conducted in a hydrocarbon solvent.

7. A process according to claims 1 to 6, characterized by the fact that the polymerization is conducted continuously.

8. Copolymers of a conjugated diene with another conjugated diene or with one or more vinyl aromatic compound(s) characterized by the following features:

- a bimodal or multimodal distribution of the molecular weights;

- a global percentage of trans-1,4 linkages comprised between 70 % and 84 %;

- a global percentage of 1,2-linkages equal or less than 6,3 %;

- a global inherent viscosity comprised between 2,16 and 0,98;

- a global content of the other conjugated diene or of the vinyl aromatic compound(s) comprised between 4 % and 33 % by weight;

- a global content of the high molecular weights comprised between 10 % and 90 % by weight.

9. Copolymers according to claim 8, characterized by the fact that the microstructure of the butadienic part of the high molecular weights and of the low molecular weights is identical or different.

**Patentansprüche**

1. Herstellungsverfahren bimodaler oder multimodaler Homopolymere aus konjugierten Dienen und bimodaler oder multimodaler Copolymere aus konjugierter Diene untereinander oder mit vinylaromatischen Verbindungen, bei dem die Monomere bei einer Temperatur zwischen 20 und 200 ° C in Gegenwart eines katalytischen Systems zur Reaktion gebracht werden, das aus dem Reaktionsprodukt

a) einer organischen Verbindung eines Metalls der Gruppe 3 A des Periodensystems der Elemente nach Mendeléev entsprechend einer der folgenden Formeln:

$Me_1 \, M \, R_1 \, R_2 \, R_3 \, R_4$

$Me_2 \, [M \, R_1 \, R_2 \, R_3 \, R_4]_2$

$M \, R_1 \, R_2 \, R_3$

$Me_1 \, O \, M \, R_1 \, R_2$

wobei $Me_1$ ein Alkalimetall, $Me_2$ ein Erdalkalimetall, M ein Metall der Gruppe 3 A, $R_1$, $R_2$, $R_3$ ein Alkoyl- oder Aralkoylradikal und $R_4$ entweder einen Alkoyl- oder Aralkoylrest oder einen Rest XB, in dem X für ein Sauerstoffatom, Schwefelatom oder Stickstoffatom und B für ein Alkoyl- oder Aralkoylradikal steht, oder einen Rest $M(R_5 \, R_6)$, in dem $R_5$, $R_6$ ein Alkoyl- oder Aralkoylradikal darstellt, mit

b) einer oder mehreren Elektronendonatoren-Verbindungen, enthaltend ein oder mehrere Heteroatome aus der Klasse der aprotischen polaren Verbindungen, der Klasse der protischen polaren Verbindungen und der Klasse der Verbindungen, die aus dem Reaktionsprodukt der polaren protischen Verbindungen mit einem Alkalimetall bestehen; wobei man im Zuge der Reaktion während die Umwandlung der Monomere zwischen 20 und 90 % erfolgt ist, ein Modifikationsmittel, das kein Initiationsmittel ist, zufügt, dadurch gekennzeichnet, daß das Modifikationsmittel

i) eine Verbindung eines Übergangsmetalls der Gruppen 1B bis 7B und 8 der Periodentafel der Elemente oder

ii) eine Magnesiumverbindung der allgemeinen Formel Mg (A)₂, wobei A ein Alkoylradikal mit 1 bis 10 Kohlenstoffatomen oder den Alkoolat-, Phenat-, β-Diketonatoder Karboxylatrest bedeutet.

2. Verfahren nach Anspruch 1, dadurch gekennzeichnet, daß das Metall des Modifikationsmittels aus folgenden Übergangsmetallen ausgewählt wird: Mangan, Eisen, Kobalt, Kupfer.

3. Verfahren nach einem der Ansprüche 1 und 2, dadurch gekennzeichnet, daß das Übergangsmetall in Form eines Alkoolats, Phenats, β-Diketonats oder Karboxylats vorliegt.

4. Verfahren nach Anspruch 1, dadurch gekennzeichnet, daß das Modifikationsmittel aus der Gruppe n-Butyl-sec.-Butylmagnesium, Äthyldiglykolatmagnesium, Äthyl-sec.-Butylmagnesium ausgewählt wird.

5. Verfahren nach einem der Ansprüche 1 bis 4, dadurch gekennzeichnet, daß das Modifikationsmittel in einer Menge zugegeben wird, daß das Molenverhältnis des Modifikationsmittels zur Verbindung der Gruppe 3A zwischen 0,01 und 20 liegt.

6. Verfahren nach einem der Ansprüche 1 bis 5, dadurch gekennzeichnet, daß man in Gegenwart eines Kohlenwasserstofflösungsmittels arbeitet.

7. Verfahren nach einem der Ansprüche 1 bis 6, dadurch gekennzeichnet, daß das Verfahren kontinuierlich durchgefürt wird.

8. Copolymere von Dienen, die untereinander oder mit einer oder mehrerer vinylaromatischer Verbindungen konjugiert sind, dadurch gekennzeichnet, daß:

- eine bimodale oder multimodale Molekularmassenverteilung vorliegt;

- ein globaler Gehalt von 1,4 Transbindungen zwischen 70 und 84% vorliegt;

- ein globaler Gehalt an 1,2 Bindungen gleich oder unter 6,3% vorliegt;

- das Copolymere eine globale inhärente Viskosität zwischen 2,16 und 0,98 aufweist;

- ein globaler Gehalt des anderen konjugierten Diens oder der vinylaromatischen Verbindung(en) zwischen 4 und 33 Gew.% vorliegt;

- ein globaler Gehalt an hochmolekularen Bestandteilen zwischen 10 und 90 Gew.% vorliegt.

9. Copolymere nach Anspruch 8, dadurch gekennzeichnet, daß die Mikrostruktur des butadienischen Teils der Teile mit hohen Molekularmassen und der niedrigen Molekularmassen gleich oder verschieden ist.

0 037 616

FIG. 1.1

FIG. 1.4

FIG. 1.2

FIG. 2.1

FIG. 1.3

FIG. 2.2

1

3.1

3.2

FIG. 4.1

FIG. 4.2

FIG. 4.3

0 037 616

FIG. 5.1

FIG. 5.2

FIG. 6.1

FIG. 6.2

FIG. 6.3

5

FIG. 7.1

FIG. 8.1

FIG. 7.2

FIG. 8.2

FIG. 7.3

FIG. 8.3

FIG. 9.1

FIG. 10.1

FIG. 9.2

FIG. 10.2

FIG. 9.3

FIG. 11.1

FIG. 12.1

FIG. 11.2

FIG. 12.2

FIG. 13.1

FIG. 13.2

FIG.13.3

FIG. 14.1

FIG. 14.2